# EUROPEAN PATENT SPECIFICATION

(11) **EP 0 648 157 B1**
(45) Date of publication and mention of the grant of the patent: **02.09.1998**
(21) Application number: 93913379.9
(22) Date of filing: 16.06.1993
(51) Int. Cl.: B29C 45/00, B29C 45/76

(54) **INJECTION MOULDING OF PLASTICS ASSISTED BY PHASED GAS INJECTION**
SPRITZGIESSEN VON KUNSTSTOFF UNTERSTÜTZT DURCH PHASENWEISES ZUFÜHREN VON GAS
MOULAGE DE PLASTIQUE PAR INJECTION ASSISTE PAR L'INJECTION CADENCEE DE GAZ

(30) Priority: 16.06.1992 GB 9212739; 13.07.1992 GB 9214797
(43) Date of publication of application: 19.04.1995
(73) Proprietor: GAS INJECTION LIMITED, Nantwich, Cheshire CW5 5RL (GB)
(72) Inventor: PEARSON, Terence, Colwyn, NantwichCheshire CW5 5RL (GB)
(74) Representative: Downey, William Gerrard
(86) International application number: GB9301278
(87) International publication number: WO9325367

(56) References cited:
- EP-A- 0 310 914
- EP-A- 0 382 690
- EP-A- 0 467 565
- WO-A-92/01545
- US-A- 4 943 407
- US-A- 5 118 455

## Description

### Field Of Invention

The invention falls within the scope of plastic injection moulding, and in particular gas assisted or gas injection moulding.

### Background

In recent years there have been several developments of methods of injecting a fluid, normally in gaseous form, into the molten plastic during the injection moulding process as the plastic enters or after it has entered an injection moulding tool cavity. After injection into the flow of plastic the gas follows the path of least resistance which is in the middle of the plastic flow where the plastic is hottest and least viscous, and thereby forms continuous channels or hollow sections within the plastic moulding.

The objectives of assisting the moulding process and/or improving the quality of mouldings by the injection of gas into the molten plastic flow can include one or more of the following :-
reduction of weight by replacing plastic material with hollow gas channels.
- reduction in process cooling time by reducing the wall section of the molten plastic.
- reduction in moulded-in stress thereby reducing the tendency for mouldings to distort after moulding.
- reduction or elimination of surface sink marks as a result of the internal pressure exerted by the gas on the plastic.
- the possibility of combining thick and thin sections within a moulding design including the inclusion of webs, pillars and other design features which are not always feasible in conventional injection moulding design.
more uniform pressurisation of the moulding as the plastic cools and solidifies thereby creating a more homogeneous solidification of the plastic.
improving the flow path of the plastic into the mould cavity or cavities by the addition of thicker flow channels within the mouldings which become hollow sections after the flow of plastic is completed.
- creating thicker sections such as handles at positions remote from the feed gate or point of plastic entry into the mould cavity or cavities.

For gas assisted moulding to be effective it is necessary to accurately control the injection of gas into the molten plastic with particular reference to the timing of the gas injection relative to the timing of the injection of the plastic by the moulding machine into the mould cavity or cavities. It is necessary to control the pressure within the gas also in relation to the pressure in the plastic within the mould or at the point at which the gas is injected into the plastic.

In some versions of gas assisted moulding the gas is injected into the moulding machine nozzle as the plastic passes through the nozzle prior to its injection into the mould. In other processes the gas is injected into the mould, either directly into the moulded article cavity or cavities or into the plastic feed runners upstream of the point at which the plastic enters the moulded article cavity or cavities.

In some processes the gas is injected into the plastic in the mould in a hot runner or hot chamber or hot or cold sprue, all of which are upstream of the feed runners within the mould and the moulded article cavity or cavities.

During the development of gas assisted moulding, in the last decade or even longer, there have been a number of different methods and processes for which patents have been applied for and granted. Broadly, published and other prior art falls into two groups, the first one covering methods of injecting gas into the plastic at the point of gas injection, and the second group concerning methods of delivery of gas under control to either the moulding machine or the mould. For the moulding process to be successful it is necessary that both the method of delivering the gas and the method of injecting the gas into the plastic are compatible and are both accurately controlled.

In all the above variations of methods and positions of gas entry into the molten plastic, it is important that the timing of the commencement of gas injection is accurate, consistent, and is related to the injection of the plastic and the position of the flow of plastic during the filling of the mould cavity or cavities.

When the gas is injected into the mould cavity or cavities or feed runners within the mould, it is important that the injection of gas starts only after the points at which the gas enters the mould are covered with plastic as it flows into the mould. If the gas injection commences before the plastic is covering the point of gas entry the mould cavity will be pre-pressurised with gas and it is unlikely that the gas will enter the plastic which is the objective of this method of moulding. Also if the gas is injected into the molten plastic too near the leading flow of the plastic, the gas may burst through the leading edge of the plastic flow thereby releasing pressure of the gas within the plastic and consequently losing control of the pressurisation of the plastic. Conversely if the injection of gas is delayed too long after the flow of plastic has passed the points of gas injection, the proportion of gas to plastic within the mould cavities will be reduced and the hollow section within the plastic will not occur or spread near to the extremities of the plastic flow within the mould.

Consequently it is important for the successful operation of the process to precisely control the timing of the commencement of gas injection into the plastic flow in relation to the position of the flow at the time of gas injection. It has been normal practice to affect this timing by the use of a timer or timers to control the commencement of gas injection after a time interval commencing with the plastic injection of the moulding machine. However if for any reason, including variations in viscosity and temperature of the plastic, and hydraulic driving pressure of the moulding machine, the speed of injection may vary and consequently the flow of plastic within the mould cavity will vary at the time of gas injection.

It is therefore desirable, and the process will be more precisely controlled, if the commencement of the injection of gas is activated when a pre-determined amount of plastic has flowed into the mould. This can be more precisely indicated by the discharge of plastic from the moulding machine injection cylinder during the forward movement of the screw/plunger within the cylinder and therefore indicated by the position of the screw/plunger in relation to the stationary cylinder. As one embodiment of this invention the precise position or different positions of the screw/plunger in relation to the cylinder can be pre-determined and indicated by the use of a linear displacement transducer positioned between the screw or plunger and the machine's cylinder.

US-A-5 118 455 and EP-A-0 310 914 are both concerned with the injection moulding of plastics material, but neither discloses the sequence of phases in the gas cycle of the gas injection assistance necessary to achieve the objectives of the present invention.

### This invention

This invention covers a method and equipment for the delivery of gas to one or more positions in an injection mould tool from which gas can be injected into the molten plastic during the moulding process. The method of delivery is based on the accurate and variable pressure control within accurately time controlled phases of the gas delivery

Unlike other known processes the invention seeks to clearly define the phases for control of pressure and timing. Some processes are based on the injection of a predetermined mass or volume of gas by discharging from a pre-filled vessel of variable volume. Other processes are based on discharging a controlled variable mass of gas from a pre-charged vessel of fixed volume, and the gas mass is pre-determined by charging the vessel at a controlled pressure thereby determining the mass of gas in the vessel.

According to one aspect of the present invention there is provided a method of gas assisted injection moulding comprising the steps of supplying gas to one or more positions in an injection mould tool during the mould cycle wherein the mould cycle is divided into phases, the commencement and finish of each phase are controlled and the gas pressure during each phase is separately controlled in order that gas may be injected into the molten plastic within the mould cavity or material feed runners under phased pressure control, the phases comprising the following:-
Phase 1 Commencement of the injection of plastic into the mould cavity or cavities.
Phase 2 Release of gas to lines connecting the mould gas injection points to give a pressure below the pressure of the plastic at the point of gas injection, thereby preventing the gas being injected into the plastic.
Phase 3 Increasing the gas pressure at a variably controlled rate of increase to a maximum pressure above the pressure of the plastic at the point of entry of the gas into the plastic, thereby enabling the gas to be injected into the moulten plastic.
Phase 4 Maintenance of the maximum gas pressure for a time controlled period during the completion of the filling of the mould cavity or cavities with plastic and gas.
Phase 5 Reduction of gas pressure to approximately atmospheric pressure before opening of the mould and ejection of the moulded article or articles.

According to another aspect of the present invention there is provided apparatus for the gas assisted injection moulding of plastic comprising a mould defining a mould cavity, means for supplying plastic to the mould cavity, means for supplying gas to one or more positions in the cavity or in runners leading to the cavity and means for controlling the moulding cycle in phases, the means being operative to control the commencement and finish of each phase and to control the pressure of the gas during each phase, the phases comprising the following:-
Phase 1 Commencement of the injection of plastic into the mould cavity or cavities.
Phase 2 Release of gas to lines connecting the mould gas injection points to give a pressure below the pressure of the plastic at the point of gas injection, thereby preventing the gas being injected into the plastic.
Phase 3 Increasing the gas pressure at a variably controlled rate of increase to a maximum pressure above the pressure of the plastic at the point of entry of the gas into the plastic, thereby enabling the gas to be injected into the moulten plastic.
Phase 4 Maintenance of the maximum gas pressure for a time controlled period during the completion of the filling of the mould cavity or cavities with plastic and gas.
Phase 5 Reduction of gas pressure to approximately atmospheric pressure before opening of the mould and ejection of the moulded article or articles.

The invention is based on the fact that gas, unlike liquids, is compressible and that the control of the volume or mass of gas for injection moulding is irrelevant. It is an assumption of this invention that it is therefore more important to control the pressure of the gas and to have available throughout the moulding cycle an amount of gas well in excess of the amount required during one moulding cycle and at a pressure above the maximum pressure required during the cycle. As a result it is then possible to exert sufficient pressure according to a phased pre-determined programme at any time during the production cycle, to control the rate of pressure build-up in the moulding cavity to the maximum required during the mould filling phase, to maintain the high pressure whilst the plastic is completing the filling of the mould cavity or cavities, and then to control the rate of pressure reduction, to what is referred to as a "hold-on pressure" during solidification of the plastic material, and then a further reduction in pressure to approximately atmospheric pressure before the mould opens and the moulded article is ejected from the mould.

The invention makes it easier and more effective in controlling individually timed pressure phases to a number of different gas injection points within a mould. This enables each cavity of a multi cavity mould to be separately controlled. It is also more suitable for use with larger more complex mouldings which benefit from multi gas injection positions. The timing of gas injection can be phased and pressures applied can be individually and differently profiled to suit the requirements of each area of the moulding supplied by a gas injection position. This enables the commencement of gas injection to individual positions to be sequential and to follow the flow of plastic over and past each gas injection position. This can be achieved without the provision of separate gas volume controlled chambers. This invention requires only timed pressure control valves for each feed position when separate control is required for each position. Alternatively the commencement of gas injection to individual positions within the mould may be timed to occur simultaneously In all cases the exhaust of gas may be via a common gas exit circuit, which may be fed to a gas recovery unit or to atmosphere.

In order that the invention may be more clearly understood, embodiments thereof will now be described by way of example with reference to the accompanying drawings, in which:-
Figure 1 A gas circuit diagram illustrating the creation and control of gas pressure and its delivery to the injection mould tool 1.4. Nitrogen gas is supplied to the equipment from a gas bottle 1.2, the gas is increased in pressure with a booster pump identified in block 1.3. The gas is fed to a storage vessel 1.1 and then controlled in pressure and timed phases to a single line by a series of valves indicated in block 1.5. Block 1.6 illustrates P.L.C. and digital readout and control apparatus.
Figure 2 Graphical representation of the phased gas pressure during the total moulding time cycle (7 phases).
Figure 3 Graphical representation of the phased gas pressure during the moulding time cycle (5 phases).
Figure 4 Graphical representation of the phased gas pressure during the moulding time cycle and the sequentially controlled gas pressure increased to four different and separate gas injection points.
Figure 5 General arrangement drawing showing an injection moulding machine screw and cylinder and the addition of a linear displacement transducer 5.1 to indicate the position of the screw/piston 5.2 in relation to the cylinder 5.4.

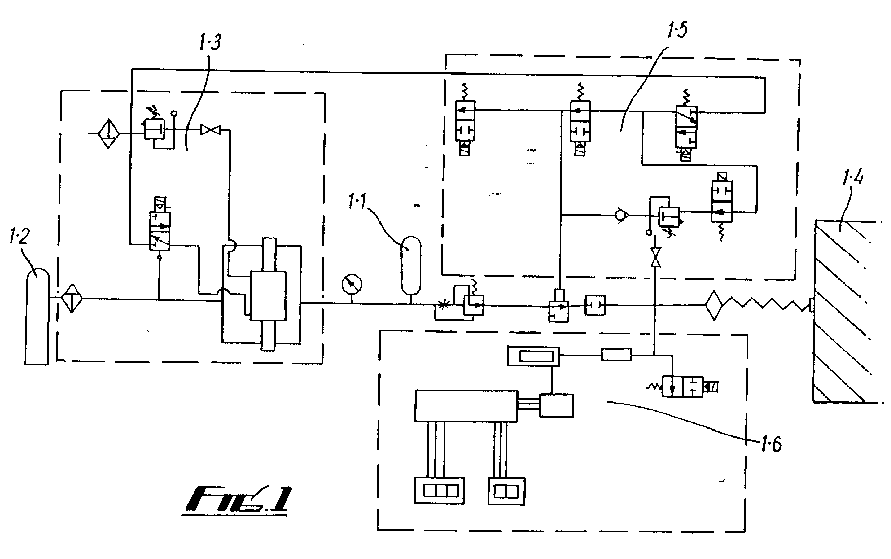

The invention includes a method of pre-charging the pressure vessel (1.1 in Figure 1) with gas, which is preferably nitrogen, from a gas source 1.2 via a booster pump and equipment 1.3 to a pre-determined pressure above the maximum pressure required at the mould point of gas injection 1.4.

The phased gas pressure control is achieved with a series of pressure relief valves and control circuit illustrated in block 1.5. The timed control of the gas circuit is achieved by a Programmed Logic Control (PLC) with digital control and display 1.6.

The Phased Pressure Control is achieved by multifunction closed loop multi-valve operation and control circuit illustrated in block 1.5 (Figure 1).

By consistently sampling the applied pressure in the gas output circuit a 3-term algorithm microprocessor calculates the requirement for gas on a pre-determined programme. Algorithm controls the outputs which modulate the valves to give the required pressure at a particular moment in time according to the pre-determined programme.

The sampling factor is typically 1 in 1,000, while the rapid response achieved by a scan of 2.5 mu/s per 1,000 of instructions and in an output switching frequency of 100 times per second.

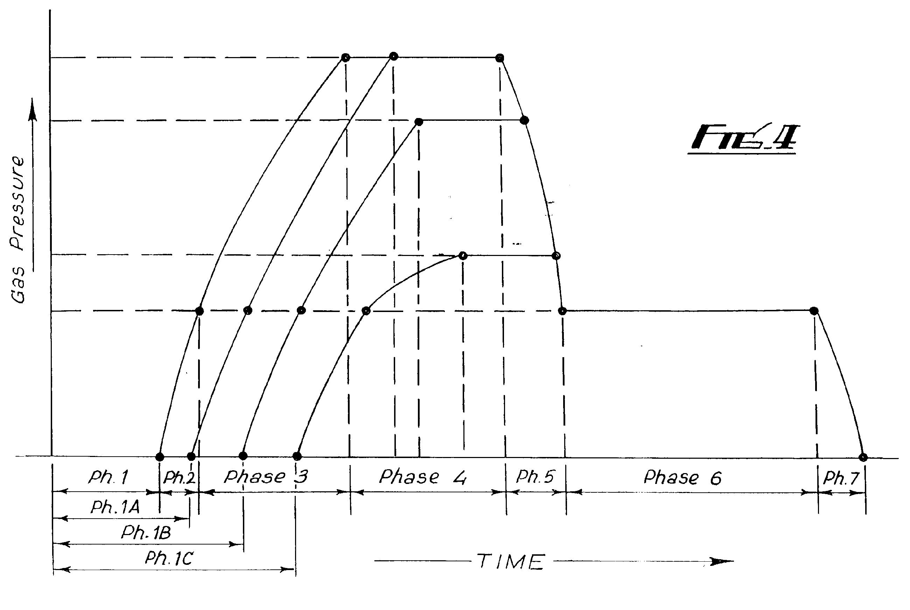

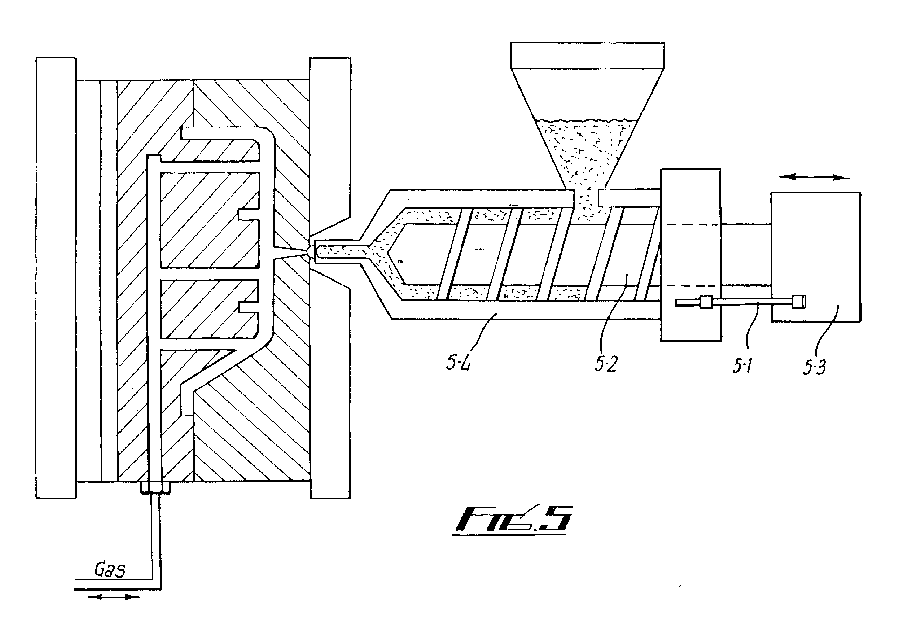

As an embodiment of this invention the commencement of gas injection at the point of gas entry (at the end of Phase 1) may be more accurately controlled in relation to the flow of plastic into the mould by the use of a linear displacement transducer 5.1 placed between the plastic injection screw 5.2 or plunger gearbox housing 5.3 and the injection moulding machine plastic cylinder 5.4 (Figure 5). Thereby the precise position of the screw in relation to the cylinder may be signalled to the gas injection unit which will initiate the commencement of gas injection. Further this may be repeated for a number of different pre-determined positions of the screw or plunger if sequential gas injection times are required at different gas injection entry points (Figure 4 Phase 1/A, 1/B and 1/C).

Further if required, the linear displacement transducer may also be used to signal the commencement of other phases of the gas pressure sequence instead of using the conventional time controllers.

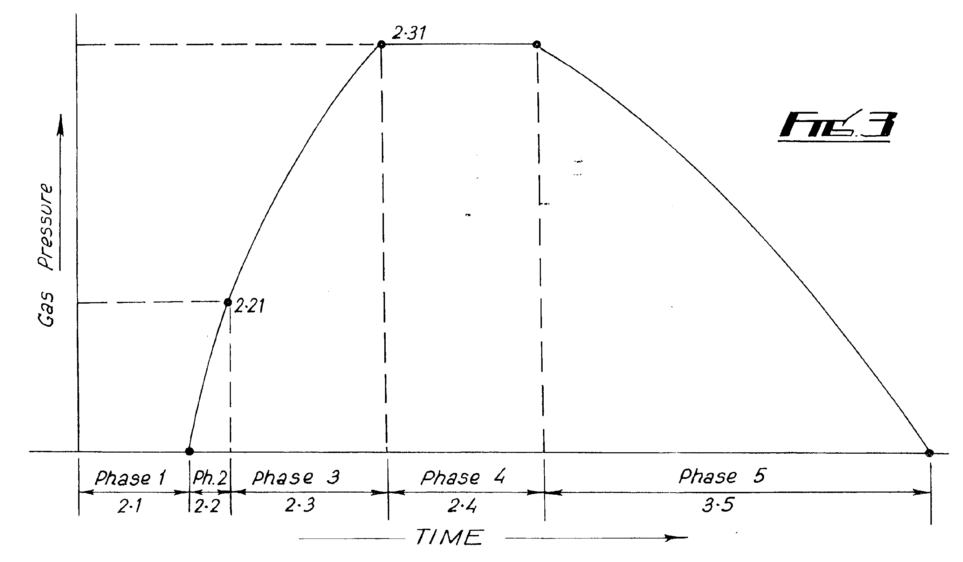

In another embodiment of the invention the maximum pressure in the gas within the mould may be reduced at a controlled rate comparatively slowly and continuously over a time controlled period (Phase 5) until atmospheric pressure is reached (Figure 3, 3.5), thereby circumventing the normal hold-on pressure and avoiding the sudden drops of pressure which in some moulded products may cause movement within the plastic whilst it is cooling and solidifying which could result in imperfections in the moulded article.

### Typical Example of Phased Pressure Injection

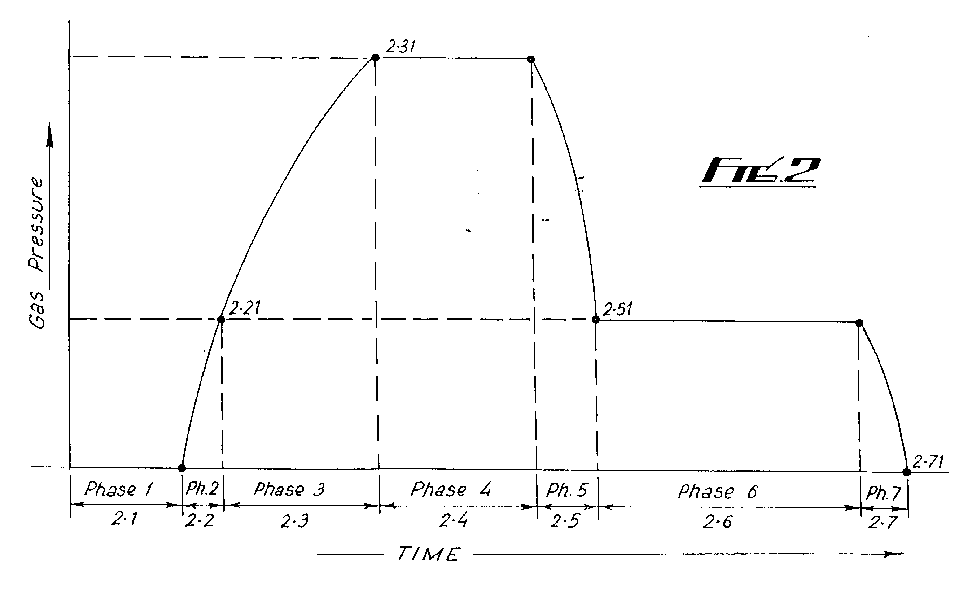

In preparation for the moulding cycle a high pressure vessel of a volume well in excess of the amount of gas required by the moulding and feed pipe circuit is pre-charged with nitrogen gas at a pressure above the maximum pressure required. The moulding cycle comprises the following phases (refer to Figure 2):-
Phase 1 (2.1) Commencement of plastic injection into the mould thereby covering the gas injection position or positions with plastic whilst the plastic flows into the mould cavity or cavities. It is preferred that the completion of Phase 1 is signalled by the use of a linear displacement transducer as described above.
Phase 2 (2.2) Line gas pressure to the mould is increased to a pressure 2.21 which is below the pressure of the plastic at the point of gas injection, thereby delaying the injection of the gas into the plastic.
Phase 3 (2.3) The gas pressure is increased at the gas injection point at a controlled rate of increase to a pressure above the pressure within the plastic to enable the gas to penetrate the outer skin of the plastic and to flow into the molten plastic within the mould cavity and the gas pressure continues to increase at a controlled rate to a maximum pressure 2.31 to assist the filling of the mould cavity or cavities with plastic and gas. A typical maximum pressure required may be 5000 p.s.i. (330 bar). In some mouldings, particularly thick sections, the maximum pressure may be significantly lower, and in other long flow path mouldings it may be higher in order to assist the filling of the mould cavity or cavities.
Phase 4 (2.4) Maintenance of the maximum pressure during final filling of the mould cavity or cavities with plastic and gas.
Phase 5 (2.5) Following the total filling of the mould cavity or cavities with plastic and gas, the pressure within the gas is relieved or reduced at a controlled rate to a "hold-on pressure" 2.51. Typical hold-on pressure is 500 p.s.i. (35 bar).
Phase 6 (2.6) Maintenance of the hold-on pressure during cooling and solidification of the plastic enabling the gas pressure to be exerted on the plastic so that the plastic remains in contact with the mould cavity surfaces thereby more effectively replicating the cavity surface shape and texture. This pressure is maintained until the material has totally solidified. During this phase the gas expands to compensate for volumetric shrinkage of the plastic whilst the plastic cools.
Phase 7 (2.7) Relief of pressure in the mould cavities to atmospheric pressure 2.71 or just above in order that there should be no differential pressure within the cavities when the mould opens and the moulded articles are ejected from the mould cavities.

### Alternatively

Phase 5 (3.5) may be extended to include Phases 6 and 7 by slowing the rate of gas pressure reduction to a continuous relief of pressure over a controlled and predetermined time 3.5 (refer to Figure 3).

### Alternatively

Phase 1 may be applied to two or more gas injection positions individually controlled by the use of time controllers or signals from a liner displacement transducer as described above and illustrated in Figure 4, PH 1A, PH 1 B and PH 1 C.

It is an important requirement of a preferred method that there should be sufficient storage of gas in a pre-charged vessel at a pressure of above the maximum pressure required at the point of injection within the moulding cycle, and so that the pressure may be held at the maximum pressure for a sufficient period of time to enable the mould cavity to be completely filled with plastic and gas. Following filling of the mould cavity and commencement of the solidification of the plastic, the maximum pressure is reduced to a hold-on pressure during which solidification of the plastic is completed before the moulded article is removed by ejection from the mould.

It will be appreciated that the above embodiments have been described by way of example only and that many variations are possible without departing from the scope of the invention.

## Claims

1. A method of gas assisted injection moulding comprising the steps of supplying gas to one or more positions in an injection mould tool during the mould cycle wherein the mould cycle is divided into phases, the commencement and finish of each phase are controlled and the gas pressure during each phase is separately controlled in order that gas may be injected into the molten plastic within the mould cavity or material feed runners under phased pressure control, the phases comprising the following:-
Phase 1 Commencement of the injection of plastic into the mould cavity or cavities.
Phase 2 Release of gas to lines connecting the mould gas injection points to give a pressure below the pressure of the plastic at the point of gas injection, thereby preventing the gas being injected into the plastic.
Phase 3 Increasing the gas pressure at a variably controlled rate of increase to a maximum pressure above the pressure of the plastic at the point of entry of the gas into the plastic, thereby enabling the gas to be injected into the moulten plastic.
Phase 4 Maintenance of the maximum gas pressure for a time controlled period during the completion of the filling of the mould cavity or cavities with plastic and gas.
Phase 5 Reduction of gas pressure to approximately atmospheric pressure before opening of the mould and ejection of the moulded article or articles.

2. A method as claimed in claim 1, in which a high pressure gas vessel of a fixed volume is filled with gas at a pressure above the maximum pressure required during the moulding production time cycle at the point of gas injection to the mould.

3. A method as claimed in claim 2, in which the gas pressure vessel is of a sufficient volume to deliver gas at the maximum pressure required and in volumes sufficient to fill the moulded articles and pressure delivery lines without the necessity for further charging during the moulding time cycle.

4. A method as claimed in claim 1, 2 or 3, in which the maximum pressure is reduced gradually and continuously until atmospheric pressure is reached without an intermediate "hold-on" pressure and over a controlled time period.

5. A method as claimed in claim 1, 2 or 3, in which maximum pressure is reduced at a controlled rate of reduction to a "hold-on pressure", and the hold-on pressure is maintained during the cooling and solidification of the plastic in the mould.

6. A method as claimed in claims 1,2,3,4 or 5, in which gas is delivered to one or more gas injection points within an injection moulding tool and each gas point is supplied with individually controlled gas pressure and timing according to the phase delivery of gas.

7. A method as claimed in claim 6, in which gas is delivered to a plurality of moulded article cavities within a mould so that the phased gas pressure control may be applied to each cavity and according to a separately controlled programme.

8. A method as claimed in claim 6, in which gas is delivered to a plurality of gas injection points in one moulding cavity so that the phased gas pressure control may be applied to each gas injection point and according to a separately controlled programme for each.

9. A method as claimed in any preceding claim, in which one or more phases are activated by the use of a linear displacement transducer which will accurately signal the predetermined but variable position of the moulding machine screw or plunger in relation to the material cylinder, thereby indicating the precise volume of plastic injected into the mould and the position of flow in relation to the gas injection points within the mould.

10. A method as claimed in and preceding claim, in which the commencement of phases 1,2,3 and 4 are activated by the use of a linear displacement transducer which will accurately signal the predetermined but variable position of the moulding machine screw or plunger in relation to the material cylinder, thereby indicating the precise volume of plastic injected into the mould and the position of flow in relation to the gas injection points within the mould.

11. A method as claimed in claim 9 or 10, in which the commencement of gas injection is signalled and controlled by a linear displacement transducer to two or more gas injection points within the mould, thereby achieving the sequential commencement of the gas injection at different gas injection points within the mould.

12. A method as claimed in any preceding claim in which the gas pressure is controlled by a microprocessor which operates in accordance with a 3- term algorithm constantly sampling gas pressure and calculating gas requirements on a predetermined programme.

13. Apparatus for the gas assisted injection moulding of plastic comprising a mould defining a mould cavity means for supplying plastic to the mould cavity means for supplying gas to one or more positions in the cavity or in runners leading to the cavity and means for controlling the moulding cycle in phases, the means being operative to control the commencement and finish of each phase and to control the pressure of the gas during each phase, the phases comprising the following:-
Phase 1 Commencement of the injection of plastic into the mould cavity or cavities.
Phase 2 Release of gas to lines connecting the mould gas injection points to give a pressure below the pressure of the plastic at the point of gas injection, thereby preventing the gas being injected into the plastic.
Phase 3 Increasing the gas pressure at a variably controlled rate of increase to a maximum pressure above the pressure of the plastic at the point of entry of the gas into the plastic, thereby enabling the gas to be injected into the moulten plastic.
Phase 4 Maintenance of the maximum gas pressure for a time controlled period during the completion of the filling of the mould cavity or cavities with plastic and gas.
Phase 5 Reduction of gas pressure to approximately atmospheric pressure before opening of the mould and ejection of the moulded article or articles.

14. Apparatus as claimed in claim 13, in which the means for controlling comprises a gas control circuit

15. Apparatus as claimed in claim 14, in which the means for controlling comprises a time control comprising a programmed logic control.

16. Apparatus as claimed in claim 14, in which the programmed logic control is digital and comprises a display

17. Apparatus as claimed in claim 13, in which the means for supplying plastic comprises a plunger/cylinder arrangement.

18. Apparatus as claimed in claim 17, in which a linear displacement transducer is associated with the plunger/cylinder arrangement to enable the precise position of the plunger in the cylinder to be determined and employed to initiate gas injection.

19. Apparatus as claimed in any of claims 13 to 18 in which the means for controlling comprises a microprocessor which operates in accordance with a 3- term algorithm constantly sampling gas pressure and calculating gas requirements on a predetermined programme.

## Patentansprüche

1. Verfahren zum gasgestützen Spritzgießen mit den Schritten Zuführen von Gas zu einer oder mehreren Positionen in einem Spritzgußwerkzeug während des Formzyldus, wobei der Formzyklus in Phasen unterteilt ist, deren Anfang und Ende jeweils gesteuert wird, und der Gasdruck während jeder Phase separat gesteuert wird, damit das Gas in den geschmolzenen Kunststoff im Formhohlraum oder in Materialangüsse mit phasenbezogener Drucksteuerung injiziert werden kann, wobei die Phasen sind:
Phase 1: Beginn des Einspritzens von Kunststoff in den Formhohlraum oder die Formhohlräume;
Phase 2: Freigeben von Gas in die Leitungen, die mit den Gasinjektionspunkten der Form verbunden sind, um am Punkt der Gasinjektion einen Druck unterhalb des Druckes des Kunststoffes zu erzeugen, wodurch verhinder wird, daß Gas in den Kunststoff injiziert wird;
Phase 3: Erhöhen des Gasdruckes mit einer variabel gesteuerten Steigerungsrate auf einen Maximaldruck oberhalb des Druckes des Kunststoffes am Punkt des Gaseintritts in den Kunststoff, wodurch es möglich wird, daß Gas in den geschmolzenen Kunststoff injiziert werden kann;
Phase 4: Aufrechterhalten des maximalen Gasdruckes für eine gesteuerte Zeitspanne während der Beendigung des Füllens des Formhohlraums oder der Formhohlräume mit Kunststoff und Gas;
Phase 5: Reduzieren des Gasdruckes auf ungefähr atmosphärischen Druck vor dem Öffnen der Form und Auswerfen des oder der Formartikel.

2. Verfahren nach Anspruch 1,
wobei ein Hochdruckgasbehälter mit feststehendem Volumen mit Gas mit einem Druck oberhalb des Druckes gefüllt ist, der während des Spritzgußfertigungszyklus am Punkt der Gasinjektion in die Form erforderlich ist.

3. Verfahren nach Anspruch 2,
wobei der Gasdruckbehälter ein ausreichendes Volumen hat, um Gas mit dem erforderlichen Maximaldruck und in Volumina, die für das Füllen der Formartikel und der Druckzuführleitungen ausreichend sind, zu liefern, ohne daß ein weiteres Laden während dem Spritzgußfertigungszyklus notwendig ist.

4. Verfahren nach Anspruch 1, 2 oder 3,
wobei der Maximaldruck ohne dazwischenliegenden "Halte"-Druck und über eine gesteuerte Zeitspanne graduell und kontinuierlich reduziert wird, bis atmosphärischer Druck erreicht ist.

5. Verfahren nach Anspruch 1, 2 oder 3,
wobei der Maximaldruck mit einer gesteuerten Rate auf einen "Halte"-Druck verringert wird, und der Halte-Druck während dem Abkühlen und Festwerden des Kunststoffs in der Form aufrechterhalten wird.

6. Verfahren nach Anspruch 1, 2, 3, 4 oder 5, wobei einem oder mehreren Gasinjektionspunkten innerhalb eines Spritzgußwerkzeuges Gas zugeführt wird, und jeder Gaspunkt mit individuell gesteuertem Gasdruck und Zeitplan gemäß der Phase der Gaszufuhr gespeist wird.

7. Verfahren nach Anspruch 6,
wobei einer Anzahl von Spritzgußartikel-Hohlräumen in einer Form Gas zugeführt wird, so daß die phasenabhängige Gasdrucksteuerung für jeden Hohlraum und gemäß eines separat gesteuerten Programms durchgeführt wird.

8. Verfahren nach Anspruch 6,
wobei Gas einer Anzahl von Gasinjektionspunkten in einem Spritzgußhohlraum zugeführt wird, so daß die phasenabhängige Gasdrucksteuerung für jeden Gasinjektionspunkt und gemäß eines jeweils separat gesteuerten Programms durchgeführt wird.

9. Verfahren nach einem der vorstehenden Ansprüche,
wobei eine oder mehrere Phasen durch die Verwendung eines linearen Stellungsgebers aktiviert werden, der genau die vorbestimmte, jedoch variable Position der Spritzgußmaschinensshnecke oder des Kolbens in Relation zu dem Materialzylinder signalisiert, wodurch das präzise Volumen des in die Form eingespritzten Kunststoffs und die Position des Stromes bezogen auf die Gasinjektionspunkte in der Form angegeben wird.

10. Verfahren nach einem der vorstehenden Ansprüche,
wobei der Anfang der Phase 1, 2, 3 und 4 durch die Verwendung eines linearen Stellungsgebers aktiviert wird, der die vorbestimmte, jedoch variable Position der Spritzgußmaschinenschraube oder des Kolbens in Relation zum Materialzylinder, genau signalisiert, wodurch das präzise Volumen des in die Form eingespritzten Kunststoffes und die Position des Stromes bezogen auf die Gasinjektionspunkte in der Form angegeben wird.

11. Verfahren nach Anspruch 9 oder 10,
wobei der Anfang der Gasinjektion durch einen linearen Stellungsgeber an zwei oder mehr Gasinjektionspunkten in einer Form signalisiert und gesteuert wird, wodurch der sequentielle Beginn der Gasinjektion an den verschiedenen Gasinjektionspunkten in der Form erzielt wird.

12. Verfahren nach einem der vorstehenden Ansprüche,
wobei der Gasdruck durch einen Mikroprozessor gesteuert wird, der in Übereinstimmung mit einem gemäß einem 3-Term-Algorithmus konstant abgetasteten Gasdruck arbeitet und die Gaserfordernisse mit einem vorbestimmten Programm berechnet.

13. Vorrichtung für das gasgestützte Spritzgießen von Kunststoff mit einer Form, die einen Formhohlraum definiert, Mitteln zum Zuführen von Kunststoff in den Formhohlraum, Mitteln zum Zuführen von Gas zu einer oder mehr Positionen in dem Hohlraum oder in Angüssen, die zu dem Hohlraum führen, und Mitteln zum Steuern des Spritzgußzyklus in Phasen, wobei die Mittel so betrieben werden können, daß der Anfang und das Ende jeder Phase und der Gasdruck während jeder Phase gesteuert werden kann, wobei die Phasen sind:
Phase 1: Beginnen des Einspritzens von Kunststoff in den Formhohlraum oder die Formhohlräume;
Phase 2: Freigeben von Gas in die Leitungen, die mit den Gasinjektionspunkten der Form verbunden sind, um am Punkt der Gasinjektion einen Druck unterhalb des Druckes des Kunststoffes zu erzeugen, wodurch verhindert wird, daß Gas in den Kunststoff injiziert wird;
Phase 3: Erhöhen des Gasdruckes mit einer variabel gesteuerten Steigerungsrate auf einen Maximaldruck oberhalb des Druckes des Kunststoffes am Punkt des Gaseintritts in den Kunststoff, wodurch es möglich wird, daß Gas in den geschmolzenen Kunststoff injiziert werden kann;
Phase 4: Aufrechterhalten des maximalen Gasdrucks für eine gesteuerte Zeitspanne während der Beendigung des Füllens des Formhohlraums oder der Formhohlräume mit Kunststoff und Gas;
Phase 5: Reduzieren des Gasdruckes auf ungefähr atmosphärischen Druck vor dem Öffnen der Form und Auswerfen des oder der Formartikel.

14. Vorrichtung nach Anspruch 13,
wobei die Mittel zum Steuern eine Gassteuerschaltung aufweisen.

15. Vorrichtung nach Anspruch 14,
wobei die Mittel zum Steuern eine Zeitsteuerung mit einer programmierten Logiksteuerung aufweisen.

16. Vorrichtung nach Anspruch 14,
wobei die programmierte Logiksteuerung digital ist und eine Anzeige aufweist.

17. Vorrichtung nach Anspruch 13,
wobei die Mittel zum Zuführen von Kunststoff eine Kolben/Zylinder-Anordnung aufweisen.

18. Vorrichtung nach Anspruch 17,
wobei der Kolben/Zylinderanordnung ein linearer Stellungsgeber zugeordnet ist, um die präzise Position des Kolbens im Zylinder bestimmen zu können und für das Auslösen der Gasinjektion zu verwenden.

19. Vorrichtung nach einem der Ansprüche 13 bis 18, wobei die Mittel zum Steuern einen Mikroprozessor aufweisen, der in Übereinstimmung mit einem gemäß einem 3-Term-Algorithmus konstant abgetasteten Gasdruck arbeitet und die Gaserfordernisse nach einem vorbestimmten Programm berechnet.

## Revendications

1. Procédé de moulage par injection assisté au gaz, comprenant les étapes consistant à fournir du gaz à une ou plusieurs positions dans un outil de moulage par injection durant le cycle de moulage, dans lequel le cycle de moulage est divisé en des phases, le commencement et l'achèvement de chaque phase étant commandé et la pression de gaz durent chaque phase étant commandée séparément, de manière que du gaz puisse être injecté dans la matière plastique moulée se trouvant à l'intérieur de la cavité de moulage, ou dans des canaux d'injection de matériau, sous une commande de pression dans le cadre d'une phase, les phases comprenant les étapes ci-après :
Phase 1 commencement de l'injection de la matière plastique dans la cavité ou las cavités de moulage.
Phase 2 libération du gaz à des tuyauteries relient les points d'injection de gaz de moulage pour fournir une pression inférieure à la pression de la matière plastique au point d'injection du gaz, de manière à empêcher l'injection du gaz dans la masse de la matière plastique.
Phase 3 augmentation de la pression de gaz à une vitesse d'augmentation commandés variable, jusqu'à atteindre une pression maximale supérieure à la pression de la matière plastique au point d'entrée du gaz dans la matière plastique, de manière à permettre au gaz d'être injecté à l'intérieur de la masse de matière plastique moulée.
Phase 4 maintien de la pression de gaz maximale pendant une période de temps commandée durant l'achèvement du remplissage des cavités de moulage par de la matière plastique et du gaz.
Phase 5 réduction de la pression de gaz à environ la valeur de la pression atmosphérique avant ouverture du moule et éjection de l'article ou des articles moulés,

2. Procédé selon la revendication 1, dans lequel un récipient à gaz à haute pression, d'un volume fixe, est rempli de gaz à une pression supérieure à la pression maximale nécessaire pendant la durée du cycle de production de moulage, au point d'injection du gaz au moule.

3. Procédé selon la revendication 2, dans lequel le récipient à pression de gaz est d'un volume suffisant pour fournir du gaz à la pression maximale nécessaire et en des volumes suffisants pour remplir les articles moulés et les tuyauteries de fourniture de pression, sans nécessiter un chargement supplémentaire pendant la durée du cycle de moulage.

4. Procédé selon la revendication 1, 2 ou 3, dans lequel la pression maximale est réduite graduellement et de façon continue jusqu'à atteinte de la pression atmosphérique sans période intermédiaire de "maintien" de pression et sur une durée commandée.

5. Procédé selon la revendication 1, 2 ou 3, dans lequel la pression maximale est réduite, à une vitesse de réduction commandée, jusqu'à une "pression de maintien", et la pression de maintien est maintenue durent le refroidissement et la solidification de la matière plastique se trouvant dans le moule.

6. Procédé selon les revendications 1, 2, 3, 4 ou 5, dans lequel du gaz est fourni à un ou plusieurs points d'injection de gaz dans un outil de moulage par injection et chaque point d'injection du gaz est alimenté par une pression de gaz commandée de façon individuelle et avec un séquencement correspondant à la phase de fourniture du gaz,

7. Procédé selon la revendication 6, dans lequel du gaz est fourni à une pluralité de cavités d'articles moulés se trouvant dans un moule, si bien que la commande de la pression du gaz, en fonction de la phase, peut être appliquée à chaque cavité et selon un programme commandé séparément.

8. Procédé selon la revendication 6, dans lequel du gaz est fourni à une pluralité de points d'injection de gaz dans une cavité de moulage, si bien que la commande de pression de gaz correspondant à la phase peut être appliquée à chaque point d'injection de gaz et en fonction d'un programme commandé séparément pour chacun.

9. Procédé selon l'une quelconque des revendications précédentes, dans lequel une ou plusieurs places sont activées par utilisation d'un capteur de déplacement linéaire qui signale de façon précise la position prédéterminée mais variable de la vis ou du plongeur de la machine de moulage par rapport au cylindre rempli de matériau, de manière à indiquer la volume précis de plastique injecté dans le moule et la position de l'écoulement en relation avec les points d'injection de gaz à l'intérieur du moule.

10. Procédé selon l'une quelconque des revendications précédentes, dans lequel le commencement des phases 1, 2, 3 et 4 est activé par utilisation d'un capteur de déplacement linéaire qui signale de façon précise la position prédéterminée mais variable de la vis ou du plongeur de la machine de moulage en relation avec le cylindre rempli de matériau, de manière à indiquer le volume précis de matière plastique injectée dans le moule et la position de l'écoulement en relation avec les points d'injection de gaz à l'intérieur du moule.

11. Procédé selon la revendication 9 ou 10, dans lequel le commencement de l'injection de gaz est commandé par un capteur de déplacement linéaire, surveillant deux points d'injection de gaz ou plus à l'intérieur du moule, de manière à effectuer le commencement séquentiel de l'injection de gaz en différents points d'injection de gaz à l'intérieur du moule.

12. Procédé selon l'une quelconques des revendications précédentes, dans lequel la pression de gaz est commandée par un microprocesseur qui agit un fonction d'un algorithme à trois termes, opérant un échantillonnage constant de la préssion du gaz et calculant les exigences en gaz, d'après un programme prédéterminé.

13. Appareil pour le moulage de matière plastique par injection assisté au gaz, comprenant un moule définissant une cavité de moulage, des moyens pour appliquer de la matière plastique à la cavité de moulage, des moyens pour fournir du gaz à une ou plusieurs positions dans la cavité ou dans des canaux d'injection menant à la cavité et des moyens pour commander le cycle de moulage décomposé en phases, les moyens fonctionnent pour commander la début et la fin de chaque phase et pour commander la pression du gaz durant chaque phase, les phases comprenant les étapes ci-après :
Phase 1 commencement de l'injection de la matière plastique dans la cavité ou les cavités de moulage.
Phase 2 libération du gaz vers des tuyauteries relient les points d'injection de gaz de moulage pour fournir une pression inférieure à la pression de la matière plastique au point d'injection du gaz, de manière à empêcher l'injection du gaz dans la masse de la matière plastique.
Phase 3 augmentation de la pression de gaz à une vitesse d'augmentation commandés variable, jusqu'à atteindre une pression maximale supérieure à la pression de la matière plastique au point d'entrée du gaz dans la matière plastique, de manière à permettre l'injection du gaz à l'intérieur de la masse de matière plastique moulée.
Phase 4 maintien de la pression de gaz maximale pendant une période de temps commandée durant l'achèvement du remplissage des cavités de moulage par de la matière plastique et du gaz.
Phase 5 réduction de la pression de gaz à environ la valeur de la pression atmosphérique avant ouverture du moule et éjection de l'article ou des articles moulés.

14. Appareil selon la revendication 13, dans lequel les moyens de commande comprennent un circuit de commande de gaz.

15. Appareil selon la revendication 14, dans lequel les moyens de commande comprennent une commande temporelle comprenant une commande logique programmée.

16. Appareil selon la revendication 14, dans lequel la commande logique programmée est numérique et comprend un affichage.

17. Appareil selon la revendication 13, dans lequel les moyens de fourniture de la matière plastique comprennent un montage à plongeur/cylindre.

18. Appareil selon la revendication 17, dans lequel un capteur de déplacement linéaire est associé au montage plongeur/cylindre, pour permettre de déterminer la position précise du plongeur dans le cylindre et d'utiliser cette indication pour lancer l'injection de gaz.

19. Appareil selon l'une quelconque des revendications 13 à 18, dans lequel des moyens de commande comprennent un microprocesseur qui agit selon un algorithme à trois termes, en procédant à un échantillonnage constant de la pression de gaz et en calculant les exigences de gaz d'après un programme prédéterminé.
